# EUROPEAN PATENT SPECIFICATION

(11) **EP 0 666 490 B1**
(45) Date of publication and mention of the grant of the patent: **02.09.1998**
(21) Application number: 94108637.3
(22) Date of filing: 06.06.1994
(51) Int. Cl.: G02C 1/02

(54) **Lens joint structure for frameless spectacles**
Linsenverbindungsstruktur für randlose Brille
Structure de liaison pour des lentilles de lunettes sans monture

(30) Priority: 07.02.1994 JP 35498/94
(43) Date of publication of application: 09.08.1995
(73) Proprietor: Yugen Kaisha Moná JAPAN, Corporation, Fukui-shi, Fukui-ken, 918-8016 (JP)
(72) Inventor: Yugen Kaisha Moná JAPAN, Corporation, Fukui-shi, Fukui-ken, 918-8016 (JP)
(74) Representative: VOSSIUS & PARTNER

(56) References cited:
- WO-A-94/02876
- US-A- 2 332 160
- US-A- 2 359 666
- US-A- 4 502 765

## Description

The present invention relates to a lens joint structure for frameless spectacles, particularly for connecting a temple to each lens and for connecting a bridge to the lenses arranged side by side.

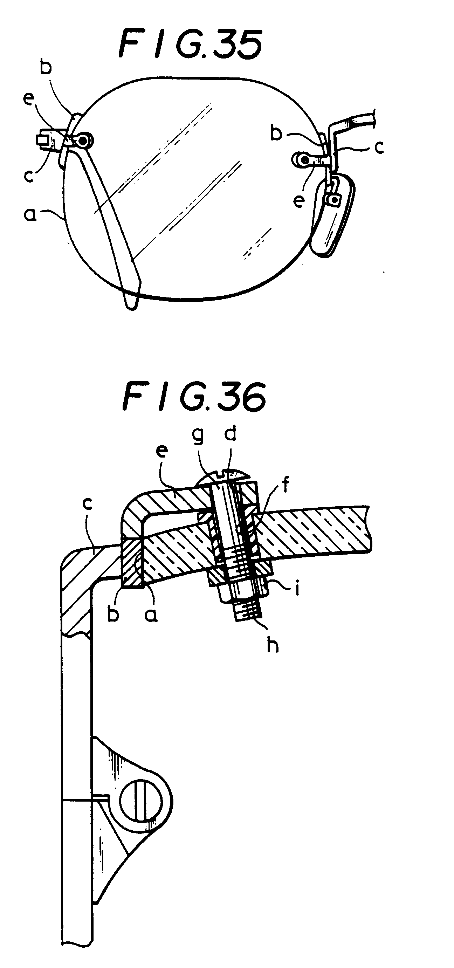

A conventional lens joint structure for frameless spectacles, particularly temple-to-lens joint for connecting a temple to the outer edge of each lens and a bridge-to-lens joint for connecting a bridge to the inner edge of each lens are shown in Figs.35 and 36.

An abutting piece "b" is curved to fit on a selected part of the lens circumference "a", and is soldered to a joint body "c". Also, the abutting piece "b" is soldered to a joint piece "e", which has a through hole "d" at its end. The temple-to-lens joint or bridge-to-lens joint thus made by soldering is attached to the lens by applying the abutting piece "b" to the selected part of the lens circumference "a"; putting the through hole "d" of the joint piece "e" in alignment with an associated through hole "f" of the lens; and by inserting a bolt or screw "g" in these through holes to be tightened by driving the thread "h" of the screw "g" in an associated nut on the other side of the lens.

As may be understood from the above, the conventional lens joint structure has a plurality of small pieces soldered, and therefore, a corresponding number of soldering steps are required in producing lens joints. This is a cause for lowering the productivity of frameless spectacles. Also, there is a fear that soldered parts of frameless spectacles are damaged or separated when the temples are inadvertently opened too wide.

In adjusting the degree at which the temples are opened with respect to the lenses, the joints are subjected to controlled bending, which , however, localizes stress strong enough to cause breaks or cracks in the localized parts of the lens.

One object of the present invention is to provide an improved lens joint structure for frameless spectacles, which lens joint structure is guaranteed free of the defects described above.

To attain this and other objects according to the present invention, a lens joint structure of frameless spectacles for connecting a joint section of a temple or a bridge to an associated lens which comprises: a circular joint hole and at least one engagement recess or through hole in the vicinity of the circular joint hole provided in the temple-to-lens or bridge-to-lens jointing area of the lens; a through hole and at least one engagement projection extending toward the lens provided in the joint section; and a resin collared-bushing having a cylindrical piece and a collar integrally connected to the base circumference of the cylindrical piece, said collar being large enough to lie on the engagement recess or through hole of the lens when the cylindrical piece is press-fitted in the circular joint hole of the lens; wherein the components of said lens joint structure are arranged such that when the joint section is put on the bushing with its engagement projection facing the engagement recess or through hole of the lens at the adjacent surface of the intervening collar of the bushing; and when a bolt is inserted in the through hole of each joint section, the through hole of the bushing and the circular joint hole of the lens to be tightened by driving the bolt into a nut on the opposite side of the lens, the engagement projection of the joint section is pushed against the collar of the bushing to cause the corresponding part of the opposite surface of the collar to invade the engagement recess or through hole of the lens.

Alternatively said lens-joint structure comprises a joint section having a through hole and at least one engagement notch or hole, and use is made of a bolt whose head has at least one engagement projection. The joint section is put on the bushing with its engagement notch or hole in alignment with the engagement recess or through hole of the lens at the adjacent surface of the intervening collar of the bushing, and when the bolt is oriented with its engagement projection in alignment with the engagement notch or hole of the joint section, and is inserted in the through hole of each joint section, the through hole of the bushing and the circular joint hole of the lens to be tightened by driving the bolt into a nut on the opposite side of the lens, the engagement projection of the bolt is pushed against the collar of the bushing to cause the corresponding part of the opposite surface of the collar to invade the engagement recess or through hole of the lens.

Alternately said lens-joint structure comprises a joint section having a through hole and at least one engagement notch or hole, and use is made of a washer having at least one engagement projection. When the joint section is put on the bushing with its engagement notch or hole in alignment with the engagement recess or through hole of the lens at the adjacent surface of the intervening collar of the bushing, when the washer is laid on the joint section with its engagement projection inserted in the engagement notch or hole of the joint section, and when a bolt is inserted in the through hole of the joint section, the through hole of the bushing and the circular joint hole of the lens to be tightened by driving the bolt into a nut on the opposite side of the lens, the engagement projection of the washer is pushed against the collar of the bushing to cause the corresponding part of the opposite surface of the collar to invade the engagement recess or through hole of the lens.

Each circular joint hole of the lens may be apart from the associated engagement recess or through hole. Further, each circular joint hole of the lens may partly communicate with the associated engagement recess or through hole.

The collar of each bushing may have at least one recess on one side and a corresponding bulge on the other side, thereby permitting the bulge of the collar to invade the engagement recess or through hole of the lens when the engagement projection is inserted into the recess of the collar by driving the bolt in the nut. The recess may open at its bottom.

When the bolt is tightened, the engagement projection is pushed against one surface of the collar of the bushing to partly deform the collar until a bulge appears on the other surface of the collar, permitting the bulge to invade the engagement recess or through hole of the lens. Thus, the joint section of the temple or bridge thus fixed to the lens is prevented from rotating relative to the lens.

The collar of the bushing may have at least one recess on one side and corresponding bulge or bulges on the other side. Such bushing may be applied to the lens by inserting its cylindrical piece in the circular joint hole of the lens and its bulge in the engagement recess or through hole of the lens respectively.

Other objects and advantages of the present invention will be apparent from the following description of some preferred embodiments of the present invention, which are shown in accompanying drawings.
Fig.1 is a perspective view showing how a temple is connected to a lens by a joint section having engagement projections;
Fig.2 is a perspective view showing how a bridge is connected to the lens by a joint section having engagement projections;
Fig.3 is a perspective, exploded view of a temple-to-lens joint structure including a joint section having engagement projections;
Fig.4 is a perspective view of a joint section having two engagement projections and a collared-bushing;
Fig.5 shows, in section, how the joint section having two engagement projections and the collared-bushing are used to fix the temple to the lens;
Fig.6 is an enlarged section showing how the two engagement projections of the joint section are applied to the collared-bushing to fix the temple to the lens;
Fig.7 is a front view of a part of the lens in which a joint hole and two engagement recesses are made (different arrangement of two engagement recesses being shown by broken lines);
Fig.8 is similar to Fig.7, but showing a joint hole and a single engagement recess on a lens;
Fig.9 is a perspective view of a joint section having a single engagement projection and a collared-bushing having a single recess, which bushing is to be used with the lens having a single engagement recess as shown in Fig.8;
Fig.10 is a perspective view showing that a temple is attached to a lens by using a bolt having an engagement projection integrally connected to its head;
Fig.11 is a perspective view showing that a bridge is attached to a lens by using a bolt having an engagement projection integrally connected to its head;
Fig.12 is a perspective, exploded view of a lens joint structure using a bolt having an engagement projection integrally connected to its head;
Fig.13 is a perspective view of a bolt having an engagement projection integrally connected to its head and an associated collared-bushing;
Fig.14 shows, in section, how the bolt having an engagement projection integrally connected to its head and the associated collared-bushing are used to fix the temple to the lens;
Fig.15 is an enlarged section showing how the engagement projections of the bolt head is applied to the collared-bushing to fix the temple to the lens;
Fig.16 is a perspective view showing a joint section having an engagement through hole and a center through hole;
Fig.17 is a perspective view showing that a temple is attached to a lens by using a washer having an engagement projection integrally connected to its rear side;
Fig.18 is a perspective view showing that a bridge is attached to a lens by using a washer having an engagement projection integrally connected to its rear side;
Fig.19 is a perspective, exploded view of a lens joint structure using a washer having an engagement projection integrally connected to its rear side;
Fig.20 is a perspective view of a washer having an engagement projection integrally connected to its rear side and an associated collared-bushing;
Fig.21 shows, in section, how the washer having an engagement projection integrally connected to its rear side and the associated collared-bushing are used to fix the temple to the lens;
Fig.22 is an enlarged section showing how the engagement projections of the washer is applied to the collared-bushing to fix the temple to the lens;
Fig.23 is a perspective view showing a hexagonal-ended joint section having an engagement through hole and a center through hole;
Fig.24 is a perspective view of a modification of collared-bushing;
Fig.25 is a perspective view of another modification of collared-bushing;
Fig.26 is a front view of a part of the lens, showing a cocoon-shaped hole as a combination of a joint hole and an engagement recess;
Fig.27 is a perspective view of a joint section having a chamfered projection contiguous to the center through hole, and an associated collared-bushing having a cocoon-shaped hole;
Fig.28 is a perspective view of the joint section having a chamfered projection contiguous to the center through hole, the collared-bushing having a cocoon-shaped hole, and an associated bolt having a chamfered projection contiguous to its shank;
Fig.29 is a perspective view of a washer having a chamfered projection contiguous to the center through hole, a joint section having a cocoon-shaped hole, and a collared-bushing having a cocoon-shaped hole:
Fig.30 is an enlarged section showing how the engagement projections of the bolt is applied to the collared-bushing to fix the temple to the lens;
Fig.31 is a perspective view of a lens having a through hole as an engagement recess and a collared-bushing having two cylindrical pieces allotted to the engagement through hole and the joint hole of the lens;
Fig.32 is an enlarged section showing how the engagement projections of the joint section is applied to the collared-bushing to fix the temple to the lens;
Fig.33 is an enlarged section showing how semiround projection ends are applied to the semiround recesses of the lens with a collared-bushing intervening therebetween;
Fig.34 is a perspective view of a collared bushing having no engagement recess-and-bulge;
Fig.35 shows conventional temple-to-lens and bridge-to-lens joint structures; and
Fig.36 shows, in section, how a temple is fixed to a lens by the conventional temple-to-lens joint structure.

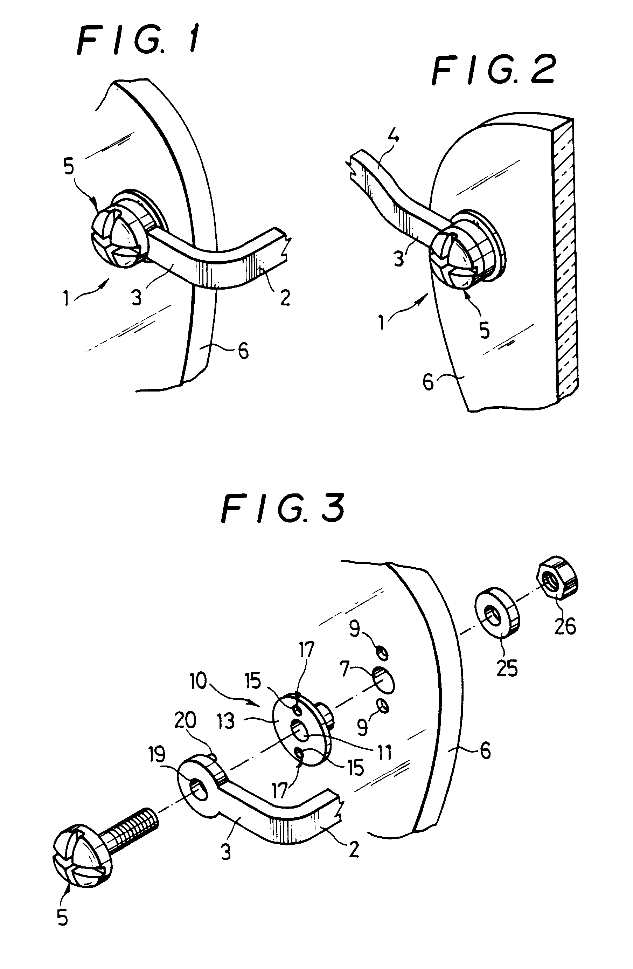

A lens joint structure 1 according to the first embodiment of the present invention is shown as connecting the joint section 3 of a temple 2 to an associated lens 6 by a bolt or screw 5 and nut (Fig.1) and as jointing the joint section 3 of a bridge 4 to the lens 6 by a bolt or screw 5 and nut (Fig.2). The following description is directed to the temple-to-lens joint structure.

Referring to Fig.3, a circular joint hole 7 is made in the temple-to-lens jointing area of the lens 6, and circular recesses 9 and 9 are made just above and below the circular joint hole 7 on the front side of the lens 6. As seen from the drawing these upper and lower circular recesses 9 are close to the circular joint hole 7.

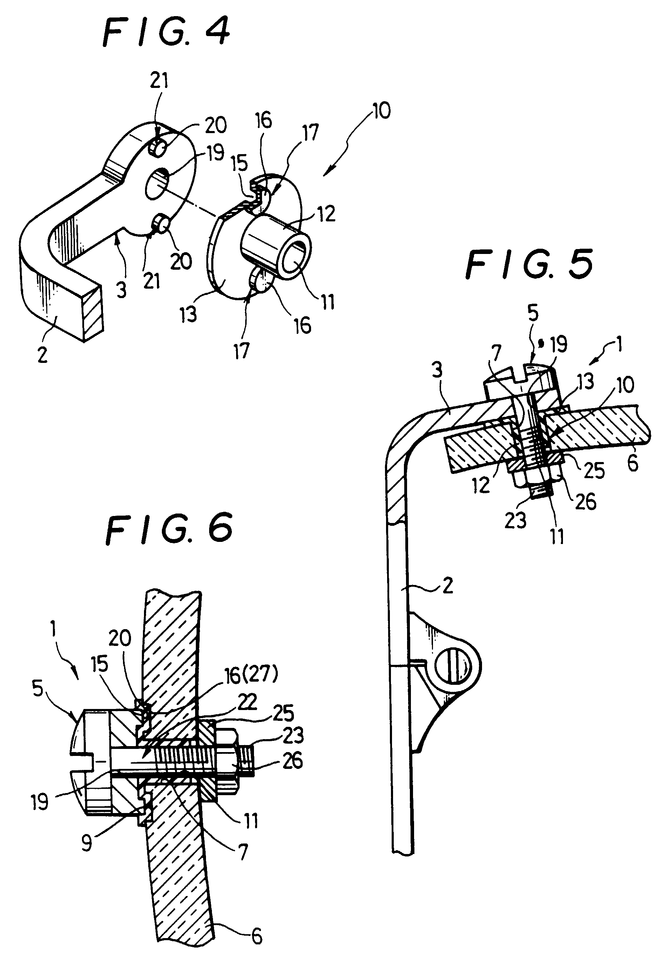

A collared-bushing 10 of a resin such as nylon is applied to the circular joint hole 7. As shown in Figs.3 and 4, it comprises a circular cylindrical piece 12 having a through hole 11 and a collar 13 integrally connected to the base circumference of the cylindrical piece 12. The cylindrical piece 12 is adapted to fit in the circular joint hole 7. The collar 13 has upper and lower recesses 15 on its front side and corresponding bulges 16 on its rear side. Engagement parts 17 are made up by these upper and lower recesses 15 and bulges 16. The bulges 16 fit in the upper and lower engagement recesses 9 when the cylindrical piece 12 is press-fitted in the circular joint hole 7 of the lens 6.

The joint section 3 of the temple 2 has a round end, and it has a through hole 19 at its center and upper and lower engagement projections 21 above and below the through hole 19 on its rear side, as best seen from Fig.4. The end surfaces 20 of these engagement projections 21 are adapted to fit in the upper and lower recesses 15 of the collar 13 of the resin collared-bushing 10.

Referring to Figs.5 and 6, the collared-bushing 10 is applied to the front side of the lens 6 with its cylindrical piece 12 and bulges 16 fitted in the circular joint hole 7 and engagement recesses or through holes 9 of the lens 6, and then the joint section 3 of the temple 2 is laid on the collared-bushing 10 with its engagement projections 21 fitted in the recesses 15 of the collared-bushing 10. Thereafter, a bolt or screw 5 is inserted in the through hole 19 of the joint section, the through hole 11 of the collared bushing 10, the joint hole 7 of the lens 6, and a washer 25 on the rear side of the lens 6, and then, the threaded length of the bolt shank is driven into a nut 26 to tighten these parts until the end surfaces 20 of the engagement projections 21 push the bulges 16 into the engagement recesses or through holes 9 of the lens 6 tightly enough to prevent the coming-up of the engagement projections 21 therefrom. Thus, the joint section 3 is fixed to the lens 6 without permitting rotation of the temple 2 relative to the lens 6.

The collared-bushing 10 may have no recess-and-projections. In this case the same rotation-preventing effect as described above can be caused as seen from Fig.6. Specifically the tightening of the bolt 5 by driving its thread 23 in the nut 26 will cause the collar 13 of the bushing 10 to be deformed by the end surfaces 20 of the engagement projections, allowing the collar 13 of the bushing 10 to invade the engagement recesses 9 of the lens 6 in the form of bulges 27. Thus. the joint section 3 is fixed to the lens 6 without permitting rotation of the temple 2 relative to the lens 6.

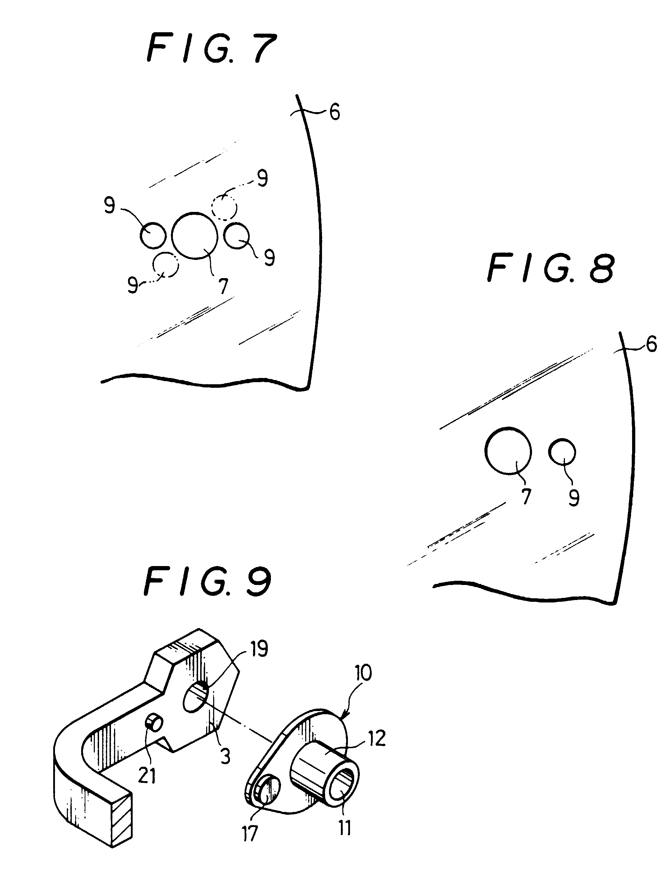

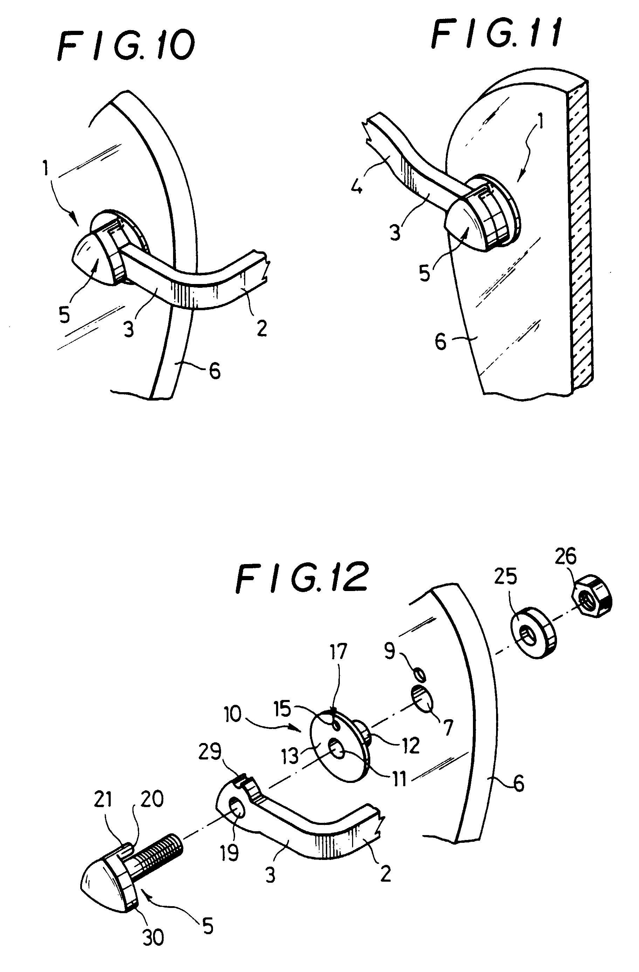

On the lens 6 the two engagement recesses 9 may be arranged side by side relative to the joint hole 7 transversely (solid lines) or obliquely (broken lines) as shown in Fig.7. As a matter of course the recesses and the projections must be arranged on the bushing and the joint section respectively to be in conformity with the transverse or oblique arrangement of the engagement recesses 9 on the lens 6. The number of the engagement recess can be one, as shown in Fig.8. In the drawing the engagement recess 9 is somewhat remote from the joint hole 7. In Fig.9 a collared-bushing 10 is shown as having a single recess-and-bulge 17 in conformity with the single engagement recess 9 in the lens 6 (Fig.8), and the joint section 3 has a single engagement projection 21, too.

The bolt or screw may be inserted from the rear side of the lens, and may be driven into the nut on the front side of the lens. The collared-bushing and the joint section may be applied to the rear side of the lens, and then the bolt or screw may be inserted from the front or rear side of the lens.

A lens joint structure 1 according to the second embodiment of the present invention is shown as connecting the joint section 3 of a temple 2 to an associated lens 6 by a bolt or screw 5 and nut (Fig.10) and as connecting the joint section 3 of a bridge 4 to the lens 6 by a bolt or screw 5 and nut (Fig.11). The following description is directed to the temple-to-lens joint structure.

Referring to Fig.12, a circular joint hole 7 is made in the temple-to-lens jointing area of the lens 6, and a circular recess 9 is made just above the circular joint hole 7 on the front side of the lens 6. As seen from the drawing the circular recess 9 is close to the circular joint hole 7.

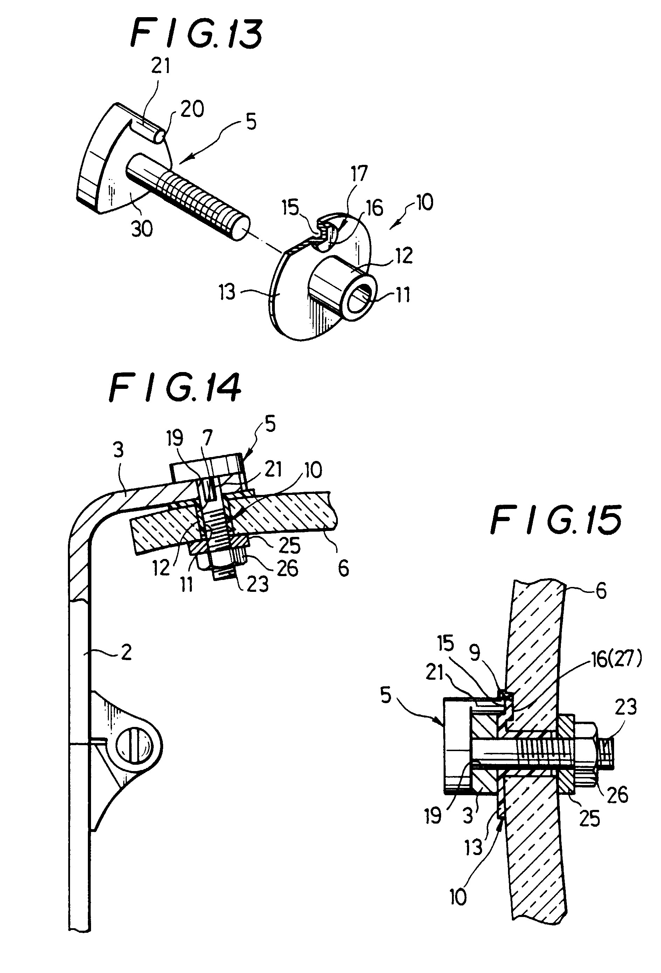

A collared-bushing 10 of a resin such as nylon is applied to the circular joint hole 7. As shown in Figs.12 and 13, it comprises a circular cylindrical piece 12 having a through hole 11 and a collar 13 integrally connected to the base circumference of the cylindrical piece 12. The cylindrical piece 12 is adapted to fit in the circular joint hole 7. The collar 13 has a recess 15 on its front side and corresponding bulge 16 on its rear side. An engagement part 17 is made up by these recess 15 and bulge 16. The bulge 16 fits in the engagement recess 9 when the cylindrical piece 12 is press-fitted in the circular joint hole 7 of the lens 6.

The joint section 3 of the temple 2 has a triangular end, and it has a through hole 19 at its center and a semicircular notch 29 on its crest, as best seen from Fig.12.

The head 30 of the bolt or screw 5 has an engagement projection 21 integrally connected to its rear side, and the engagement projection 21 is shaped so as to fit in the semicircular notch 29 of the joint section 3, and the recess 15 of the collar 13 of the bushing 10, as seen from Figs.12 and 13.

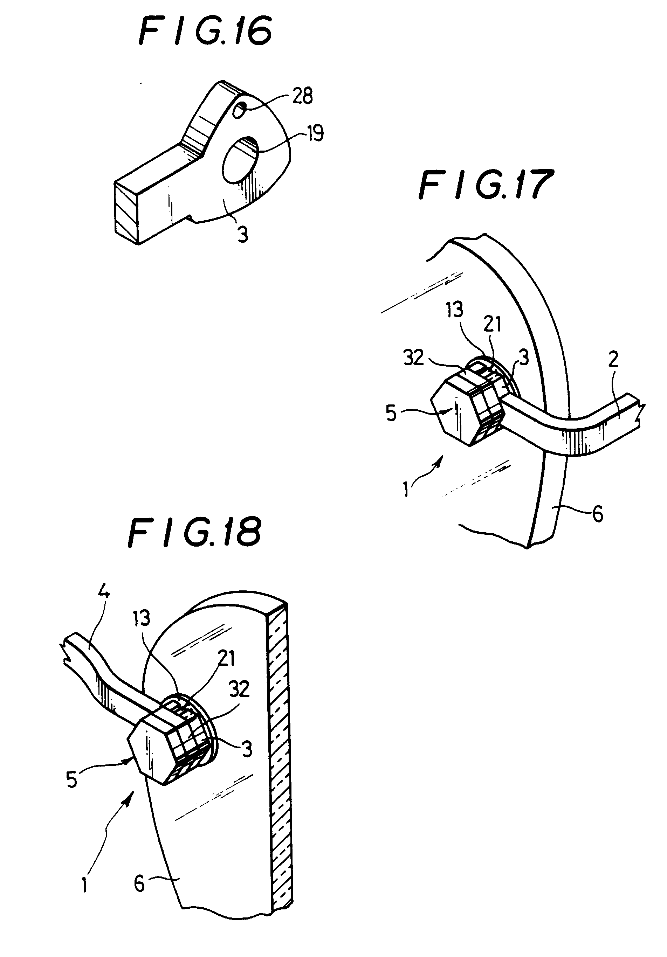

Referring to Figs.14 and 15, the collared-bushing 10 is applied to the front side of the lens 6 with its cylindrical piece 12 and bulge 16 fitted in the circular joint hole 7 and engagement recess 9 of the lens 6, and then the joint section 3 of the temple 2 is laid on the collared-bushing 10 with its semicircular notch 29 aligned with the recess 15 of the collared-bushing 10. Thereafter, a bolt or screw 5 is inserted in the through hole 19 of the joint section 3 with its engagement projection 21 inserted in the semicircular notch 29 of the joint section 3, and then the bolt 5 is inserted in the through hole 11 of the collared bushing 10 with its engagement projection end 20 inserted in the recess is of the collar 13 of the bushing 10, and finally the bolt 5 is inserted in the joint hole 7 of the lens 6, and in a washer 25 on the rear side of the lens 6. A nut 26 is threadedly engaged with, and rotated about the threaded length of the bolt shank to tighten these parts until the end surface 20 of the engagement projection 21 push the bulge 16 into the engagement recess 9 of the lens 6 so tightly that the bulge 16 may be prevented from coming up from the engagement recess 9. Thus. the joint section 3 is fixed to the lens 6 without permitting rotation of the temple 2 relative to the lens 6.

The collared-bushing 10 may have no recess-and-projection. In this case the same rotation-preventing effect as described above can be caused as seen from Fig.15. Specifically the tightening of the bolt 5 by using the nut 26 will cause the collar 13 of the bushing 10 to be deformed by the end surface 20 of the engagement projection 21, allowing the deformed part of the collar 13 to invade the engagement recess 9 of the lens 6 in the form of bulge 27. Thus, the joint section 3 is fixed to the lens 6 without permitting rotation of the temple 2 relative to the lens 6.

As shown in Fig.16, the joint section 3 may have a through hole 28 in place of the semicircular notch 29. The engagement projection 21 of the bolt 5 is inserted in the through hole 28 of the joint section 3, and the engagement projection 21 will press against the engagement recess 15 of the collar 13 until the bulge 16 is press-fitted in the engagement recess 9 of the lens 6 when the bolt 5 is tightened by means of the nut 26. Thus, the temple-to-lens joint section can be fixed to the lens 6 without permitting rotation of the joint section 3 relative to the lens 6.
A plurality of engagement projections may be integrally connected to the head of a bolt 5, and then, the plurality of notches or holes may be made in the joint section 3 at so selected positions that the engagement projections may fit in the notches or holes of the joint section 3 when the bolt 5 is inserted in the center through hole 19 of the joint section 3. Likewise, the plurality of recess-and-bulges are made in the collar 13 of the bushing 10, and the plurality of engagement recesses 9 are made on the lens 6.

The collared-bushing and the joint section may be applied to the rear side of the lens, and then the bolt or screw may be inserted from the rear side of the lens.

A lens joint structure 1 according to the third embodiment of the present invention is shown as connecting the joint section 3 of a temple 2 to an associated lens 6 by a bolt 5 and nut, and a special washer 32 (Fig.17) and as connecting the joint section 3 of a bridge 4 to the lens 6 by a bolt 5 and nut, and a special washer 32 (Fig.18). The following description is directed to the temple-to-lens joint structure.

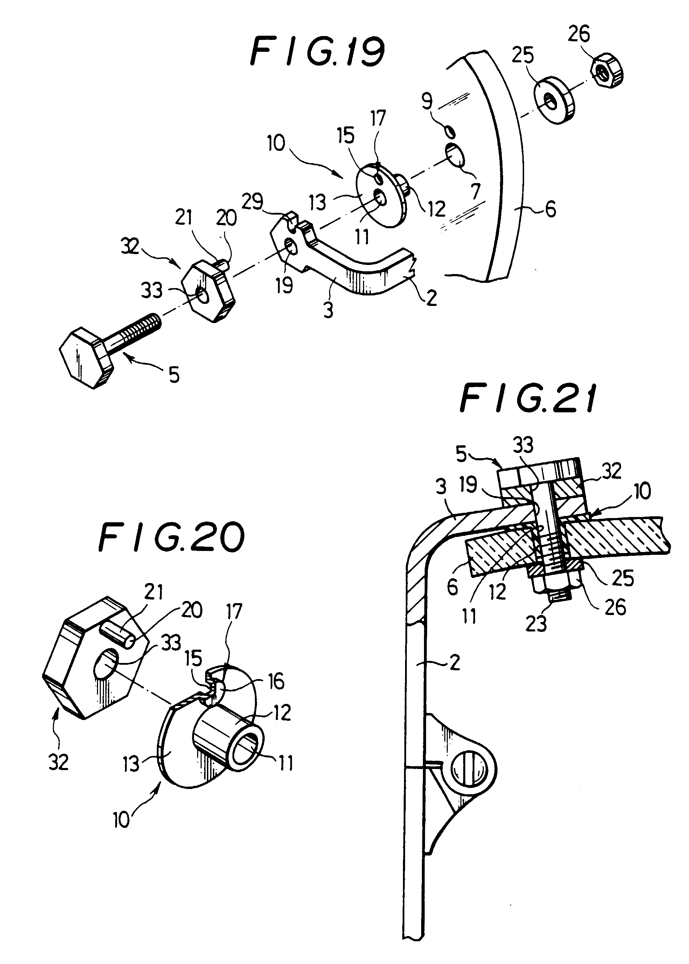

Referring to Fig.19, a circular joint hole 7 is made in the temple-to-lens jointing area of the lens 6, and a circular recess 9 is made just above the circular joint hole 7 on the front side of the lens 6. As seen from the drawing the circular recess 9 is close to the circular joint hole 7.

A collared-bushing 10 of a resin such as nylon is applied to the circular joint hole 7. As shown in Figs.19 to 20, it comprises a circular cylindrical piece 12 having a through hole 11 and a collar 13 integrally connected to the base circumference of the cylindrical piece 12. The cylindrical piece 12 is adapted to fit in the circular joint hole 7. The collar 13 has a recess 15 on its front side and corresponding bulge 16 on its rear side. An engagement part 17 is made up by these recess 15 and bulge 16. The bulge 16 fits in the engagement recess 9 when the cylindrical piece 12 is press-fitted in the circular joint hole 7 of the lens 6.

The joint section 3 of the temple 2 has a hexagonal end, and it has a through hole 19 at its center and a semicircular notch 29 on its crest.

The washer 32 is, for example, hexagonal, and has a through hole 33 at its center and an engagement projection 21 on its rear side. The engagement projection 21 passes through the semicircular notch 29 of the joint section 3 to fit in the engagement recess 9 of the lens 6, as later described.

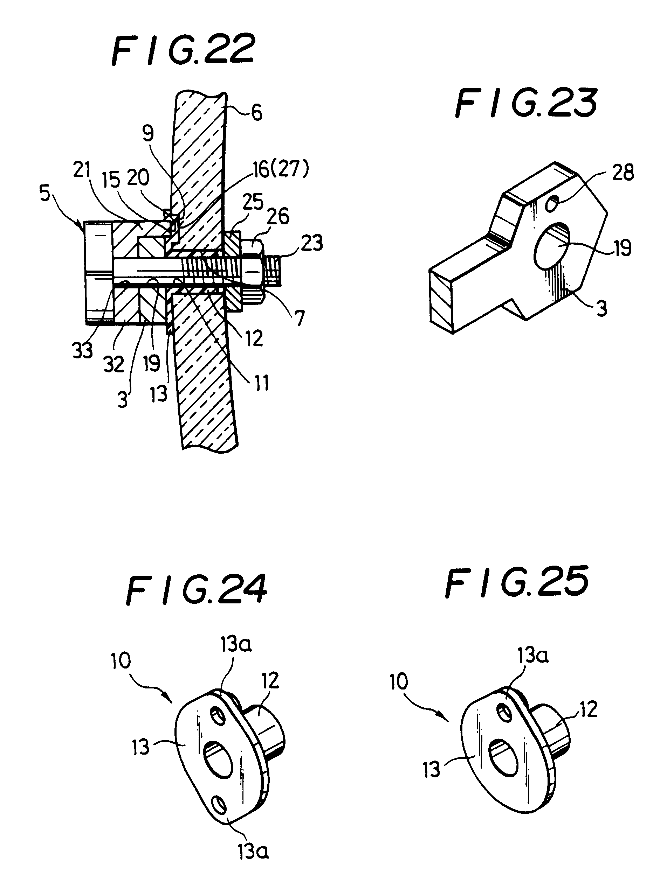

Referring to Figs.21 and 22, the collared-bushing 10 is applied to the front side of the lens 6 with its cylindrical piece 12 and bulge 16 fitted in the circular joint hole 7 and engagement recess 9 of the lens 6, and then the joint section 3 of the temple 2 is laid on the collared-bushing 10 with its semicircular notch 29 aligned with the recess 15 of the collared-bushing 10. Thereafter, the washer 32 is laid on the joint section 3 of the temple 2 with its engagement projection 21 inserted in the semicircular notch 29 of the joint section 3 (Fig.19). A bolt or screw 5 is inserted in the through hole 33 of the hexagonal washer 32, through hole 19 of the joint section 3, the through hole 11 of the collared-bushing 10, and finally the joint hole 7 of the lens 6, and in a washer 25 on the rear side of the lens 6. A nut 26 is threadedly engaged with, and rotated about the threaded length of the bolt shank to tighten these parts until the end surface 20 of the engagement projection 21 pushes the bulge 16 into the engagement recess 9 of the lens 6 so tightly that the bulge 16 may be prevented from coming up from the engagement recess 9. Thus, the hexagonal washer 32 is fixed, guaranteed free of rotation. The hexagonal washer 32 is fixed to the joint section 3 with its engagement projection 21 inserted in the semicircular notch 29 of the joint section 3, and therefore, the joint section 3 is fixed to the lens 6 without permitting rotation of the temple 2 relative to the lens 6.

The collared-bushing 10 may have no recess-and-projection. In this case the same rotation-preventing effect as described above can be caused as seen from Fig.22. Specifically the tightening of the bolt 5 by using the nut 26 will cause the collar 13 of the bushing 10 to be deformed by the end surface 20 of the engagement projection 21, allowing the deformed part of the collar 13 to invade the engagement recess 9 of the lens 6 in the form of bulge 27. Thus, the joint section 3 is fixed to the lens 6 without permitting rotation of the temple 2 relative to the lens 6.

The joint section 3 may have a through hole 28 in place of the semicircular notch 29 as shown in Fig.23. The engagement projection 21 of the hexagonal washer 32 is inserted in the through hole 28 of the joint section 3, and the engagement projection 21 will press against the engagement recess 15 of the collar 13 until the bulge 16 is press-fitted in the engagement recess 9 of the lens 6 when the bolt 5 is tightened by means of the nut 26. Thus, the temple-to-lens joint section 3 can be fixed to the lens 6 without permitting rotation of the joint section 3 relative to the lens 6.

A plurality of engagement projections may be integrally connected to the hexagonal washer 32, and then, the plurality of notches or holes 29 may be made in the joint section 3 at so selected positions that the engagement projections may fit in the notches or holes of the joint section 3 when the bolt 5 is inserted in the center through hole 19 of the joint section 3. Likewise, the plurality of recess-and-bulges are made in the collar 13 of the bushing 10, and the plurality of engagement recesses 9 are made on the lens 6.

The collared-bushing and the joint section may be applied to the rear side of the lens, and then the bolt or screw may be inserted from the rear side of the lens.

As shown in Figs.24 and 25, the collar 13 of the bushing 10 may be modified by enlarging its part or parts 13a to cover the engagement recesses of the lens.

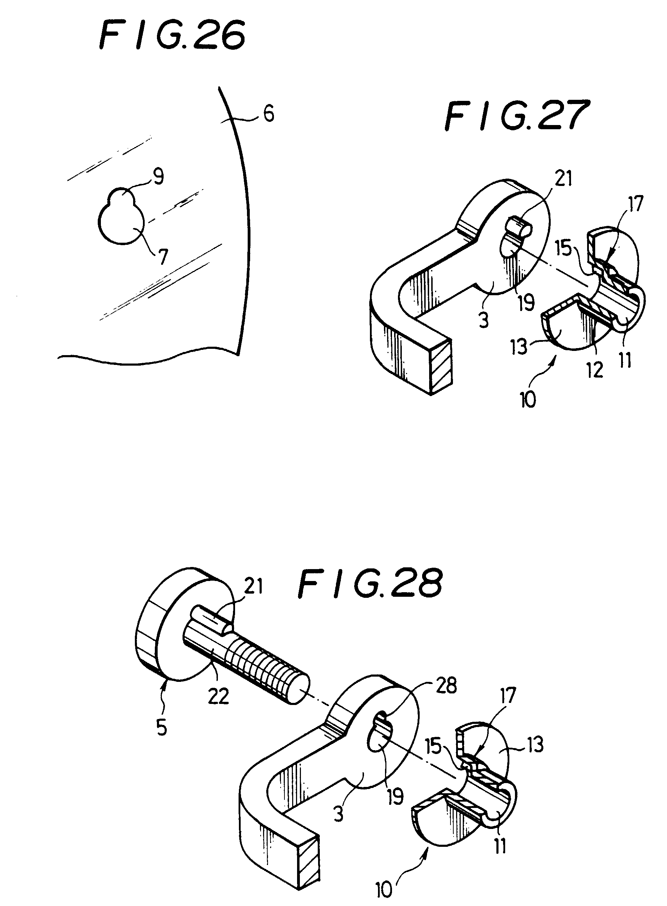

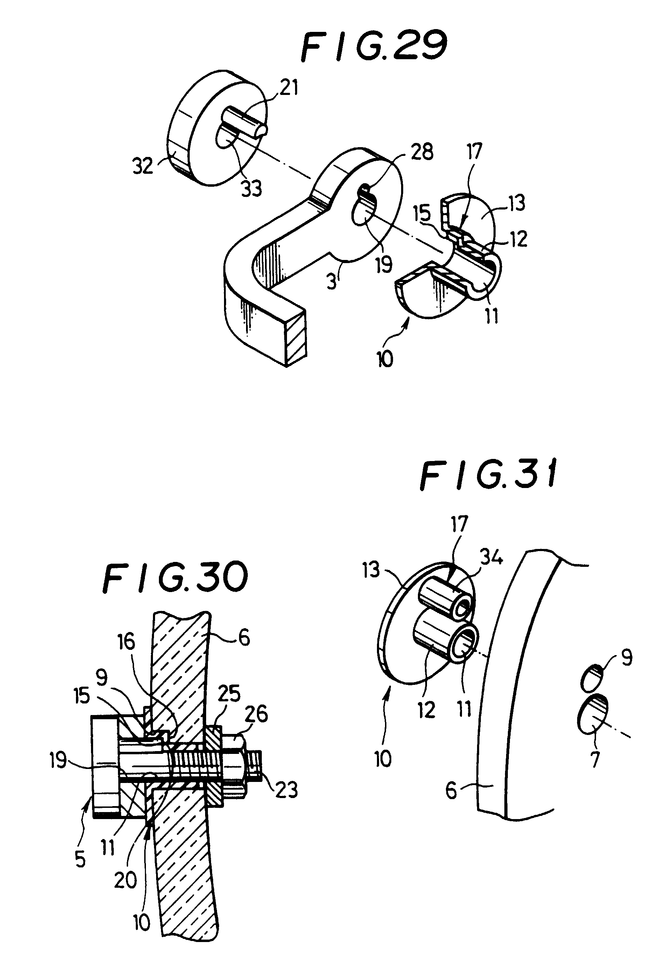

In all the embodiments described above the joint hole 7 and the engagement recess or through hole 9 may be made to be continuous to each other in the lens 6. thereby forming a cocoon shape as shown in Fig.26. Then, the recess-and-bulge of the collared bushing 10 is made to be given a similar cocoon shape whereas the engagement projection 21 is chamfered to continue to the through hole 19 of the joint section 3, as shown in Fig.27. Alternatively, the recess-and-bulge of the collared bushing 10 is made to be given a cocoon shape; a similar cocoon-shaped aperture is made in the joint section 3; and the engagement projection 21 is chamfered to continue to the shank 22 of the bolt 5, as shown in Fig.28. Also, alternatively the recess-and-bulge of the collared-bushing 10 is made to be given a cocoon shape; a similar cocoon-shaped aperture is made in the joint section 3; and the engagement projection 21 is chamfered to continue to the through hole 33 of the washer 32, as shown in Fig.29.

Referring to Figs.28 and 30, one example of these modified embodiments using parts each having a cocoon aperture is described below. The collared-bushing 10 is applied to the front side of the lens 6 with its bulged-cylindrical piece fitted in the cocoon-shaped hole of the lens 6, and then the joint section 3 is laid on the collared-bushing 10 with its cocoon-shaped opening 19 aligned with the similar opening of the collared-bushing 10. Thereafter, the bolt or screw 5 having a chamfered projection integrally connected to its shank is inserted in the cocoon-shaped apertures 19, 11 and 7 and 9 of the aligned parts 3, 10 and 6. A nut 26 is threadedly engaged with, and rotated about the threaded length of the bolt shank to tighten these parts until the engagement projection 21 pushes the bulge 16 into the engagement recess 9 of the lens 6 so tightly that the bulge 16 may be prevented from coming up from the engagement recess 9. Thus, the joint section 3 is fixed to the lens 6 without permitting rotation of the joint section 3 relative to the lens 6.

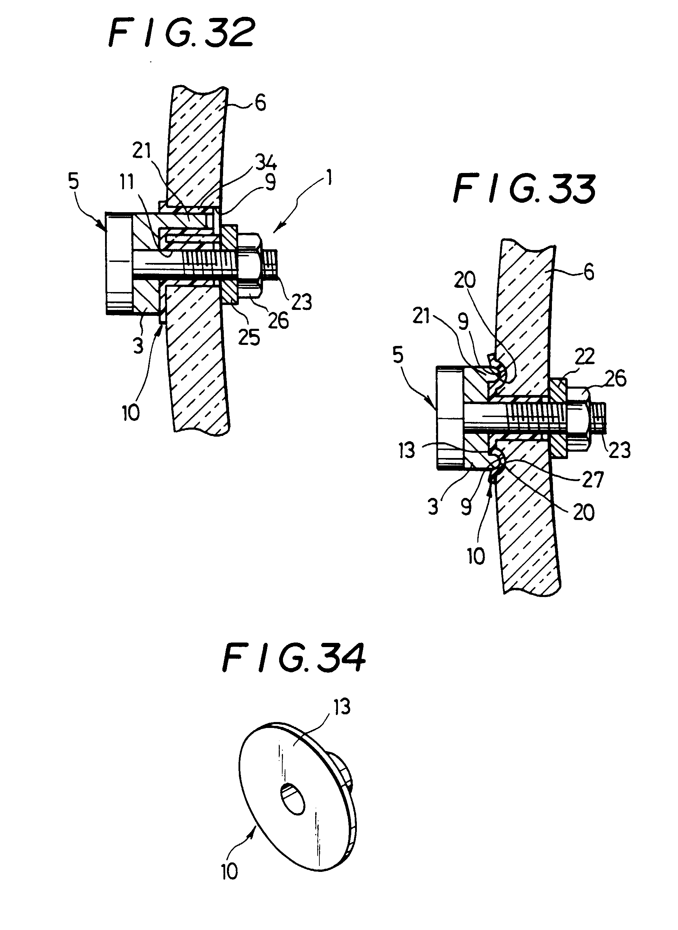

In all the embodiments (including those using cocoon-shaped openings) through holes may be used in place of engagement recesses in the lens. Figs.31 and 32 show a modified first-embodiment, which is designed to be attached to a lens 6 having a single through hole 9 in place of the two engagement recesses 9. The engagement part 17 of the collared bushing 10 has two cylindrical pieces 12 and 34 to be allotted to the joint hole 7 and the engagement through hole 9 of the lens 6. The collared bushing 10 is applied to the lens 6 by inserting its cylindrical pieces 12 and 34 in the joint hole 7 and engagement through hole 9 of the lens 6. When the bolt 5 is tightened by using the nut 26, the engagement projection 21 of the joint section 3 is inserted into the through hole 9 of the lens 6, thereby fixing the joint section 3 to the lens 6 without permitting rotation of the joint section 3 relative to the lens 6.

Referring to Figs.33 and 34, the first embodiment is described as using a collared-bushing having no engagement part. Each engagement recess of the lens 6 has a semiround form, and each engagement projection 21 of the joint section 3 has a semiround form at its end, too. They may have a cylindrical form with flat bottom, but the semi round shape facilitates deformation of the selected parts of the bushing collar which the engagement projections abut on. A nut 26 is threadedly engaged with the thread of the bolt to tighten the assembled parts until the engagement projections 21 deform the selected parts of the collar of the bushing 10 to be in conformity with the semiround recesses. The resulting semiround bulges 27 are press-fitted in the semi round recesses of the lens 6 so tightly that they may be prevented from coming up therefrom. Thus, the joint section 3 is fixed to the lens 6 without permitting rotation relative to the lens 6.

As may be understood from the above, advantageously no soldering is required in making joint structures for connecting temples and bridges to lenses in frameless spectacles. Therefore, the productivity of frameless spectacles can be substantially improved. Also, advantageously there is no fear of causing any damages of temple-to-lens joint structures by opening the temples wide relative to the lenses for adjustment, which damage is liable to be caused in conventional joint structures having parts soldered.

Thanks to no attachment piece to be fixed to a selected part of the circumference of the lens no stress can appear in the lens, and therefore the lens is advantageously guaranteed free of cracks caused by such stressing. No attachment pieces fixed to the lens circumference give a pleasing appearance to frameless spectacles.

## Claims

1. A lens joint structure of frameless spectacles for connecting a joint section of a temple or a bridge to an associated lens which comprises:
a circular joint hole (7) and at least one engagement recess or through hole (9) in the vicinity of the circular joint hole provided in the temple-to-lens or bridge-to-lens jointing area of the lens (6);
a through hole (19) and at least one engagement projection (20) extending toward the lens provided in the joint section; and
a resin collared-bushing (10) having a cylindrical piece (12) and a collar (13) integrally connected to the base circumference of the cylindrical piece, said collar being large enough to lie on the engagement recess or through hole of the lens when the cylindrical piece is press-fitted in the circular joint hole of the lens ;
wherein the components of said lens joint structure are arranged such that when the joint section is put on the bushing with its engagement projection facing the engagement recess or through hole of the lens at the adjacent surface of the intervening collar of the bushing and when a bolt (5) is inserted in the through hole of each joint section, the through hole of the bushing and the circular joint hole of the lens being tightened by driving the bolt into a nut (26) on the opposite side of the lens, the engagement projection of the joint section is pushed against the collar of the bushing to cause the corresponding part of the opposite surface of the collar to invade the engagement recess or through hole of the lens.

2. A lens joint structure of frameless spectacles for connecting a joint section of a temple or a bridge to an associated lens which comprises:
a circular joint hole (7) and at least one engagement recess or through hole (9) in the vicinity of the circular joint hole provided in the temple-to-lens or bridge-to-lens jointing area of the lens (6);
a through hole (19) and at least one engagement notch or hole (29) provided in the joint section;
a bolt (5) whose head has at least one engagement projection (21); and
a resin collared-bushing (10) having a cylindrical piece (12) and a collar (13) integrally connected to the base circumference of the cylindrical piece, said collar being large enough to lie on the engagement recess or through hole of the lens when the cylindrical piece is press-fitted in the circular joint hole of the lens ;
wherein the components of said lens joint structure are arranged such that when each joint section is put on the bushing with its engagement notch or hole in alignment with the engagement recess or through hole of the lens at the adjacent surface of the intervening collar of the bushing and when the bolt is oriented with its engagement projection in alignment with the engagement notch or hole of the joint section, and is inserted in the through hole of the joint section, the through hole of the bushing and the circular joint hole of the lens being tightened by driving the bolt into a nut (26) on the opposite side of the lens, the engagement projection of the bolt is pushed against the collar of the bushing to cause the corresponding part of the opposite surface of the collar to invade the engagement recess or through hole of the lens.

3. A lens joint structure of frameless spectacles for connecting a joint section of a temple or a bridge to an associated lens which comprises:
a circular joint hole (7) and at least one engagement recess or through hole (9) in the vicinity of the circular joint hole provided in the temple-to-lens or bridge-to-lens jointing area of the lens (6) ;
a through hole (19) and at least one engagement notch or hole (29) provided in the joint section;
a washer (32) having at least one engagement projection (21); and
a resin collared-bushing (10) having a cylindrical piece (12) and a collar (13) integrally connected to the base circumference of the cylindrical piece, said collar being large enough to lie on the engagement recess or through hole of the lens when the cylindrical piece is press-fitted in the circular joint hole of the lens;
wherein the components of said lens joint structure are arranged such that when the joint section is put on the bushing with its engagement notch or hole in alignment with the engagement recess or through hole of the lens at the adjacent surface of the intervening collar of the bushing, when the washer is laid on the joint section with its engagement projection inserted in the engagement notch or hole of the joint section, and when a bolt (5) is inserted in the through hole of the joint section, the through hole of the bushing and the circular joint hole of the lens being tightened by driving the bolt into a nut (26) on the opposite side of the lens, the engagement projection of the washer is pushed against the collar of the bushing to cause the corresponding part of the opposite surface of the collar to invade the engagement recess or through hole of the lens.

4. A lens joint structure of frameless spectacles according to claim 1, 2 or 3, wherein each circular joint hole of the lens is apart from the associated engagement recess or through hole.

5. A lens joint structure of frameless spectacles according to claim 1, 2 or 3, wherein the circular joint hole of the lens partly communicates with the associated engagement recess or through hole.

6. A lens joint structure of frameless spectacles according to claim 1, 2, 3, 4 or 5, wherein the collar of each bushing has at least one recess (15) on one side and a corresponding bulge (16) on the other side, thereby permitting the bulge of the collar to invade in the engagement recess or through hole of the lens when the engagement projection is inserted into the recess of the collar by driving the bolt in the nut.

7. A lens joint structure of frameless spectacles according to claim 6, wherein the recess opens at its bottom.

8. A lens joint structure of frameless spectacles according to claim 1, 2, 3, 4 or 5, wherein the components of said lens joint structure are arranged such that when the bolt is tightened, the engagement projection is pushed against one surface of the collar of the bushing to partly deform the collar until a bulge appears on the other surface of the collar, permitting the bulge to invade the engagement recess or through hole of the lens.

## Patentansprüche

1. Linsenverbindungsstruktur einer randlosen Brille zum Verbinden eines Verbindungsabschnitts eines Bügels oder eines Stegs mit einer zugehörigen Linse, wobei die Verbindungsstruktur aufweist:
eine kreisförmige Verbindungsbohrung (7) und mindestens eine Eingriffsaussparung oder Durchgangsbohrung (9) in der Nähe der im Bügel-Linsen- oder Steg-Linsen-Verbindungsbereich der Linse (6) vorgesehenen kreisförmigen Verbindungsbohrung;
eine Durchgangsbohrung (19) und mindestens einen in dem Verbindungsabschnitt vorgesehenen Eingriffsvorsprung (20), der sich zur Linse hin erstreckt; und
eine Bundbuchse (10) aus Kunstharz mit einem zylinderförmigen Stück (12) und einem Bund (13), der einstückig mit dem Basisumfang des zylinderförmigen Stücks verbunden ist, wobei der Bund groß genug ist, um auf der Eingriffsaussparung oder Durchgangsbohrung der Linse aufzuliegen, wenn das zylinderförmige Stück in Preßpassung in die kreisförmige Verbindungsbohrung der Linse eingesetzt ist;
wobei die Komponenten der Linsenverbindungsstruktur so angeordnet sind, daß beim Aufsetzen des Verbindungsabschnitts auf die Buchse, wobei sein Eingriffsvorsprung der Eingriffsaussparung oder der Durchgangsbohrung der Linse an der benachbarten Oberfläche des dazwischenliegenden Buchsenbundes zugewandt ist, und beim Einsetzen eines Bolzens (5) in die Durchgangsbohrung jedes Verbindungsabschnitts, wobei durch Einschrauben des Bolzens in eine Mutter (26) auf der gegenüberliegenden Linsenseite die Durchgangsbohrung der Buchse und die kreisförmige Verbindungsbohrung der Linse festgezogen werden, er Eingriffsvorsprung des Verbindungsabschnitts an den Buchsenbund angedrückt wird, um zu bewirken, daß der entsprechende Teil der gegenüberliegenden Bundfläche in die Eingriffsaussparung oder die Durchgangsbohrung der Linse eindringt.

2. Linsenverbindungsstruktur einer randlosen Brille zum Verbinden eines Verbindungsabschnitts eines Bügels oder eines Stegs mit einer zugehörigen Linse, wobei die Verbindungsstruktur aufweist:
eine Kreisförmige Verbindungsbohrung (7) und mindestens eine Eingriffsaussparung oder Durchgangsbohrung (9) in der Nähe der im Bügel-Linsen- oder Steg-Linsen-Verbindungsbereich der Linse (6) vorgesehenen kreisförmigen Verbindungsbohrung;
eine Durchgangsbohrung (19) und mindestens eine in dem Verbindungsabschnitt vorgesehene Eingriffskerbe oder -bohrung (29);
einen Bolzen (5), dessen Kopf mindestens einen Eingriffsvorsprung (21) aufweist; und
eine Bundbuchse (10) aus Kunstharz mit einem zylinderförmigen Stück (12) und einem Bund (13), der einstückig mit dem Basisumfang des zylinderförmigen Stücks verbunden ist, wobei der Bund groß genug ist, um auf der Eingriffsaussparung oder Durchgangsbohrung der Linse aufzuliegen, wenn das zylinderförmige Stück in Preßpassung in die kreisförmige Verbindungsbohrung der Linse eingesetzt ist;
wobei die Komponenten der Linsenverbindungsstruktur so angeordnet sind, daß beim Aufsetzen jedes Verbindungsabschnitts auf die Buchse, wobei seine Eingriffskerbe oder -bohrung auf die Eingriffsaussparung oder Durchgangsbohrung der Linse an der benachbarten Oberfläche des dazwischenliegenden Buchsenbundes ausgerichtet ist, und beim Orientieren des Bolzens, so daß sein Eingriffsvorsprung auf die Eingriffskerbe oder -bohrung des Verbindungsabschnitts ausgerichtet ist, und seinem Einsetzen in die Durchgangsbohrung des Verbindungsabschnitts, wobei die Durchgangsbohrung der Buchse und die Kreisförmige Verbindungsbohrung der Linse durch Einschrauben des Bolzens in eine Mutter (26) auf der gegenüberliegenden Linsenseite festgezogen werden, der Eingriffsvorsprung des Bolzens an den Buchsenbund angedrückt wird, um zu bewirken, daß der entsprechende Teil der gegenüberliegenden Bundfläche in die Eingriffsaussparung oder die Durchgangsbohrung der Linse eindringt.

3. Linsenverbindungsstruktur einer randlosen Brille zum verbinden eines Verbindungsabschnitts eines Bügels oder eines Stegs mit einer zugehörigen Linse, wobei die Verbindungsstruktur aufweist:
eine kreisförmige Verbindungsbohrung (7) und mindestens eine Eingriffsaussparung oder Durchgangsbohrung (9) in der Nähe der im Bügel-Linsen- oder Steg-Linsen-Verbindungsbereich der Linse (6) vorgesehenen kreisförmigen Verbindungsbohrung;
eine Durchgangsbohrung (19) und mindestens eine in dem Verbindungsabschnitt vorgesehene Eingriffskerbe oder -bohrung (29)
eine Unterlegscheibe (32) mit mindestens einem Eingriffsvorsprung (21); und
eine Bundbuchse (10) aus Kunstharz mit einem zylinderförmiqen Stück (12) und einem Bund (13), der einstückig mit dem Basisumfang des zylinderförmigen Stücks verbunden ist, wobei der Bund groß genug ist, um auf der Eingriffsaussparung oder Durchgangsbohrung der Linse aufzuliegen, wenn das zylinderförmige Stück in Preßpassung in die kreisförmige Verbindungsbohrung der Linse eingesetzt ist;
wobei die Komponenten der Linsenverbindungsstruktur so angeordnet sind, daß beim Aufsetzen des Verbindungsabschnitts auf die Buchse, wobei seine Eingriffskerbe oder -bohrung auf die Eingriffsaussparung oder die Durchgangsbohrung der Linse an der benachbarten Oberfläche des dazwischenliegenden Buchsenbundes ausgerichtet ist, beim Auflegen der Unterlegscheibe auf den Verbindungsabschnitt, wobei ihr Eingriffsvorsprung in die Eingriffskerbe oder -bohrung des Verbindungsabschnitts eingesetzt wird, und beim Einsetzen eines Bolzens (5) in die Durchgangsbohrung des Verbindungsabschnitts, wobei die Durchgangsbohrung der Buchse und die kreisförmige Verbindungsbohrung der Linse durch Einschrauben des Bolzens in eine Mutter (26) auf der gegenüberliegenden Linsenseite festgezogen werden, der Eingriffsvorsprung der Unterlegscheibe an den Buchsenbund angedrückt wird, um zu bewirken, daß der entsprechende Teil der gegenüberliegenden Bundfläche in die Eingriffsaussparung oder die Durchgangsbohrung der Linse eindringt.

4. Linsenverbindungsstruktur einer randlosen Brille nach Anspruch 1, 2 oder 3, wobei jede kreisförmige Verbindungsbohrung der Linse von der zugehörigen Elngriffsaussparung oder Durchgangsbohrung beabstandet ist.

5. Linsenverbindungsstruktur einer randlosen Brille nach Anspruch 1, 2 oder 3, wobei die kreisförmige Verbindungs-bohrung der Linse mit der zugehörigen Eingriffsaussparung oder Durchgangsbohrung teilweise in Verbindung stent.

6. Linsenverbindungsstruktur einer randlosen Brille nach Anspruch 1, 2, 3, 4 oder 5, wobei der Bund jeder Buchse mindestens eine Aussparung (15) auf einer Seite und eine entsprechende Ausbauchung (16) auf der anderen Seite aufweist, wodurch ermöglicht wird, daß die Ausbauchung des Bundes in die Eingriffsaussparung oder Durchgangsbohrung der Linse eindringt, wenn durch Einschrauben des Bolzens in die Mutter der Eingriffsvorsprung in die Aussparung des Bundes eingesetzt wird.

7. Linsenverbindungsstruktur einer randlosen Brille nach Anspruch 6, wobei die Aussparung an ihrem Boden offen ist.

8. Linsenverbindungsstruktur einer randlosen Brille nach Anspruch 1, 2, 3, 4 oder 5, wobei die Komponenten der Linsenverbindungsstruktur so angeordnet sind, daß beim Festziehen des Bolzens der Eingriffsvorsprung an eine Oberfläche des Buchsenbundes angedrückt wird, um den Bund teilweise zu deformieren, bis eine Ausbauchung an der anderen Oberfläche des Bundes erscheint, wodurch die Ausbauchung in die Eingriffsaussparung oder Durchgangsbohrung der Linse eindringen kann.

## Revendications

1. Structure de liaison pour des verres de lunettes sans monture, servant à raccorder une section de liaison d'une branche ou d'un pont à un verre associé, qui comprend :
un trou circulaire de liaison (7) et au moins un renfoncement d'engagement ou un trou traversant (9) au voisinage du trou circulaire de liaison, prévu dans la zone de liaison branche-verre ou pont-verre, du verre (6) ;
un trou traversant (19) et au moins un organe saillant d'engagement (20) qui s'étend en direction du verre, et prévu dans la section de liaison ; et
un manchon en résine à collet (10) possédant une partie cylindrique (12) et un collet (13) réuni solidairement à la circonférence de base de la partie cylindrique, ledit collet étant suffisamment grand pour s'étendre au-dessus du renfoncement d'engagement ou du trou traversant du verre lorsque la partie cylindrique est emmanchée à force dans le trou circulaire de liaison du verre ;
dans laquelle les composants de ladite structure de liaison du verre sont disposés de telle sorte que la section de liaison est placée sur le manchon avec sa partie saillante d'engagement tournée vers le renfoncement d'engagement ou le trou traversant du verre au niveau de la surface adjacente du collet intercalaire du manchon et lorsqu'un boulon (5) est inséré dans le trou traversant de chaque section de liaison, le trou traversant du manchon et le trou circulaire de liaison du verre étant appliqués l'un sur l'autre par l'introduction du boulon dans un écrou (26) situé sur le côté opposé du verre, la partie saillante d'engagement de la section de liaison est repoussée contre le collet du manchon de manière à amener la partie correspondante de la surface opposée du collet à pénétrer dans le renfoncement d'engagement ou dans le trou traversant du verre.

2. Structure de liaison pour verres de lunettes sans monture pour le raccordement d'une section de liaison d'une branche ou d'un pont à un verre associé, qui comprend :
un trou circulaire de liaison (7) et au moins un renfoncement d'engagement ou un trou traversant (9) au voisinage du trou circulaire de liaison, prévu dans la zone de liaison branche-verre ou pont-verre, du verre (6) ;
un trou traversant (19) et au moins une encoche ou un trou d'engagement (29) prévu dans la section de liaison ;
un boulon (5), dont la tête possède au moins une partie saillante d'engagement (21) ; et
un manchon en résine à collet (10) possédant une partie cylindrique (12) et un collet (13) réuni solidairement à la circonférence de base de la partie cylindrique, ledit collet étant suffisamment grand pour s'étendre au-dessus du renfoncement d'engagement ou du trou traversant du verre lorsque la partie cylindrique est emmanchée à force dans le trou circulaire de liaison du verre ;
dans laquelle les constituants de ladite structure de liaison du verre sont disposés de telle sorte que, lorsque chaque section de liaison est appliquée sur le manchon avec son encoche ou trou d'engagement en position alignée avec le renfoncement ou le trou traversant d'engagement du verre au niveau de la surface adjacente du collet intercalaire du manchon et lorsque le boulon est orienté de sorte que sa partie saillante d'engagement est alignée avec l'encoche ou le trou d'engagement de la section de liaison et est insérée dans le trou traversant de la section de liaison, le trou traversant du manchon et le trou circulaire de liaison du verre étant appliqués l'un sur l'autre par l'introduction du boulon dans un écrou (26) sur le côté opposé du verre, la partie saillante d'engagement du boulon est repoussée contre le collet du manchon de manière à amener la partie correspondante de la surface opposée du collet à pénétrer dans le renfoncement d'engagement ou dans le trou traversant du verre.

3. Structure de liaison de verres de lunettes dans monture servant à raccorder une section de liaison d'une branche ou d'un pont à un verre associé, qui comprend :
un trou circulaire de liaison (7) et au moins un renfoncement d'engagement ou un trou traversant (9) au voisinage du trou circulaire de liaison, prévu dans la zone de liaison branche-verre ou pont-verre, du verre (6) ;
un trou traversant (19) et au moins une encoche ou un trou d'engagement (29) prévu dans la section de liaison ;
une rondelle (32) possédant au moins une partie saillante d'engagement (21) ; et
un manchon en résine à collet (10) possédant une partie cylindrique (12) et un collet (13) raccordé solidairement à la circonférence de base de la partie cylindrique, ledit collet étant suffisamment grand pour s'étendre au-dessus du renfoncement d'engagement ou du trou traversant du verre lorsque la partie cylindrique est emmanchée à force dans le trou circulaire de liaison du verre ;
dans laquelle les constituants de ladite structure de liaison du verre sont disposés de telle sorte que lorsque la section de liaison est placée sur le manchon de telle sorte que son encoche ou trou d'engagement est aligné avec le renfoncement d'engagement ou le trou traversant du verre au niveau de la surface adjacente du collet intercalaire du manchon, lorsque la rondelle est placée sur la section de liaison avec sa partie saillante d'engagement insérée dans l'encoche ou le trou d'engagement de la section de liaison, et lorsqu'un boulon (5) est inséré dans le trou traversant de la section de liaison, le trou traversant du manchon et le trou circulaire de liaison du verre étant étanchéifiés par l'insertion du boulon dans un écrou (26) sur le côté opposé du verre, la partie d'engagement de la rondelle est repoussée contre le collet du manchon de manière à amener la partie correspondante de la surface opposée du collet à pénétrer dans le renfoncement d'engagement ou le trou traversant du verre.

4. Structure de liaison de verres de lunettes sans monture selon la revendication 1, 2 ou 3, dans laquelle chaque trou circulaire de liaison du verre est écarté du renfoncement d'engagement ou du trou traversant associé.

5. Structure de liaison de verres de lunettes sans monture selon la revendication 1, 2 ou 3, dans laquelle le trou circulaire de liaison de la lentille communique en partie avec le renfoncement d'engagement ou le trou traversant associé.

6. Structure de liaison de verres de lunettes sans monture selon la revendication 1, 2, 3, 4 ou 5, dans lequel le collet de chaque manchon possède au moins un renfoncement (15) situé d'un côté et un renflement correspondant (16) situé sur l'autre côté, ce qui permet au renfoncement du collet de pénétrer dans le renfoncement d'engagement ou dans le trou traversant du verre lorsque la partie saillante d'engagement est insérée dans le renfoncement du collet sous l'effet de l'introduction du boulon dans l'écrou.

7. Structure de liaison de verres de lunettes sans monture selon la revendication 6, dans laquelle le renfoncement est ouvert au niveau de son fond.

8. Structure de liaison de verres de lunettes sans monture selon la revendication 1, 2, 3, 4 ou 5, dans laquelle les composants de ladite structure de liaison du verre sont disposés de telle sorte que lorsque le boulon est serré, la partie saillante d'engagement est repoussée contre une surface du collet du manchon de manière à déformer partiellement le collet jusqu'à ce qu'un renflement apparaisse sur l'autre face du collet, ce qui permet au renflement de pénétrer dans le renfoncement d'engagement ou le trou traversant du verre.
